# FASCICULE DE BREVET EUROPEEN

(11) **EP 1 095 999 B1**
(45) Date de publication et mention de la délivrance du brevet: **13.06.2007**
(21) Numéro de dépôt: 00402930.2
(22) Date de dépôt: 24.10.2000
(51) Int. Cl.: C09K 17/12, C09K 103/00, F16D 69/02

(54) **Garniture de frottement et procédé de fabrication d'une telle garniture**
Reibbelag und Verfahren zur Herstellung
Friction lining and its method of fabrication

(30) Priorité: 29.10.1999 FR 9913606
(43) Date de publication de la demande: 02.05.2001
(73) Titulaire: Valeo Matériaux de Friction, 87020 Limoges cedex 9 (FR)
(72) Inventeur: Morado, Carlos, 28030 Madrid (Espagne) (ES)
(74) Mandataire: Lemaire, Marc

(56) Documents cités:
- EP-A- 0 482 210
- EP-A- 0 807 766
- EP-A- 0 854 305
- DE-C- 4 119 515
- GB-A- 2 071 795

## Description

La présente invention concerne les garnitures de frottement.

Les garnitures de frottement, telles que par exemple celles qui, supportées par un support métallique, entrent dans la composition d'un disque de friction associé à un mécanisme d'embrayage, notamment pour véhicule automobile, sont en général constituées d'un matériau homogène, lequel matériau assure non seulement les propriétés de frottement des garnitures de frottement mais également la tenue mécanique de leur fixation sur leur support.

Plus précisément un mécanisme d'embrayage pour véhicule automobile comporte un plateau de réaction, au moins un disque de friction, au moins un plateau de pression, un carter solidaire du plateau de réaction, des moyens embrayeurs prenant appui sur le carter, classiquement en forme de couvercle, pour action sur le plateau de pression et serrage du disque de friction entre les plateaux de pression et de réaction.

Le disque de friction comporte à sa périphérie externe le plus souvent deux garnitures de friction fixées par rivetage à un support métallique, avantageusement axialement élastique, accouplé de manière rigide ou élastique à un moyeu cannelé pour sa liaison en rotation à un arbre mené, le plus souvent l'arbre d'entrée de la boîte de vitesses.

Le plateau de réaction est destiné à être fixé à un arbre menant, tel que l'arbre de sortie du moteur à combustion interne du véhicule.

En variante le plateau de réaction est solidaire d'un flasque flexible destiné à être fixé audit arbre menant pour formation d'un volant flexible. En variante le plateau de réaction est accouplé à un volant destiné à être fixé audit arbre menant pour formation d'un double volant amortisseur.

Des moyens débrayeurs sont associés aux moyens embrayeurs pour contrecarrer à volonté l'action de ceux-ci.

Le plus souvent les moyens embrayeurs et débrayeurs appartiennent à une même pièce appelée diaphragme comportant une partie périphérique en forme de rondelle Belleville, prenant appui de manière basculante sur le fond du carter, ladite rondelle constituant les moyens embrayeurs de l'embrayage et étant prolongée par une partie centrale fragmentée en doigts radiaux par des fentes borgnes pour formation des moyens débrayeurs.

Normalement les garnitures de friction, sous l'action des moyens embrayeurs, sont serrées entre les plateaux de pression et de réaction en sorte que l'embrayage est embrayé. Pour débrayer l'embrayage il faut agir via une butée de débrayage sur les moyens débrayeurs soit en tirant soit en poussant selon les cas, pour faire basculer les moyens embrayeurs et annuler l'action qu'exerce ceux-ci sur le plateau de pression. Les garnitures de friction sont donc adaptées à frotter contre les plateaux de pression et de réaction, classiquement en fonte, et à être fixées, classiquement par rivetage, sur un disque de support axialement élastique pour que les garnitures de friction puissent épouser la forme notamment du plateau de réaction qui se dilate sous l'effet de la chaleur.

Le rivetage des garnitures peut poser des problèmes lorsque le disque de friction tourne à vitesse de rotation élevée.

Comme on le comprend, les meilleures performances pour assurer, d'une part, le frottement et, d'autre part, la tenue mécanique de la fixation nécessiteraient des matériaux de constitutions différentes. Par ailleurs, le matériau destiné à assurer le frottement est en général plus noble donc plus onéreux que celui qui doit assurer la fixation ; dès lors, dans une garniture de frottement constituée d'une seule pièce, la partie de fixation de cette garniture de frottement grève d'autant plus le prix de revient de la garniture qu'elle est mise ensuite au rebut, après usure normale de la garniture ; cette partie mise au rebut n'est pas toujours négligeable, notamment lorsque, par exemple, la garniture de frottement est fixée sur son support par des rivets, comme c'est le cas des garnitures de frottement d'un disque d'embrayage cité ci-dessus et comme visible par exemple dans le document FR-A-2 210 245, la hauteur de cette partie mise au rebut étant au moins égale au double de la hauteur des têtes des rivets.

Pour remédier à cet inconvénient, on a proposé de réaliser une garniture de frottement en deux couches, une couche dite de friction et une couche dite de fixation, les deux couches étant assemblées l'une à l'autre, en général par collage ; cette opération d'assemblage présente l'inconvénient d'être, d'une part, onéreuse et, d'autre part, difficile à réaliser compte tenu du comportement différent des deux couches lors de l'assemblage, lesquelles ont notamment des coefficients de dilatation différents.

L'invention a pour objet une garniture de frottement à au moins deux couches, de friction et de fixation, facile à réaliser.

Selon l'invention, une garniture de frottement du genre ci-dessus est caractérisée par le fait que les couches sont d'une seule pièce en étant constituées d'une matrice commune et de fibres, les fibres de la couche de friction étant un mélange de fibres acryliques et de fibres de verre et celles de la couche de fixation uniquement des fibres de verre.

Grâce à cette disposition, la couche de friction permet à la garniture d'assurer ses fonctions de frottement et la couche de fixation, à caractéristiques de frottement moindres mais à tenue mécanique supérieure, permet d'assurer une bonne fixation de la garniture sur son support, la matrice commune ne posant aucun problème de dilatation différentielle lors de la fabrication de la garniture de frottement.

Dans un embrayage à friction, on obtient grâce à l'invention un bon comportement des garnitures de frottement dans des conditions sévèrent d'échauffement des plateaux de pression et de réaction, tout en ayant une bonne fixation mécanique autorisant une rotation à vitesse élevée du disque de friction.

Avantageusement, la matrice commune constitue 50 à 56 pour cent en poids de la garniture.

De préférence, les fibres autant de la couche de friction que celles de la couche de fixation sont des fibres en fil continu.

La garniture de frottement peut contenir 2 à 14 pour cent en poids de fibres acryliques dans la couche de friction.

La garniture de frottement peut contenir 5 à 40 pour cent en poids de fibres de verre dans la couche de friction.

De préférence, la garniture de frottement contient 8 à 40 pour cent en poids de fibres de verre en fils dans la couche de friction.

De préférence, la garniture de frottement contient jusqu'à 60 pour cent en poids de fibres de verre en fils dans la couche de fixation.

La garniture de frottement peut contenir également 0,1 à 10 pour cent en poids de fil de cuivre dans la couche de friction.

La couche de friction peut être composée de plusieurs couches, dites ci-après sous-couches de friction, constituées de la matrice commune et de fibres en quantité pouvant varier d'une sous-couche à l'autre ; avantageusement, cette variation, progressive, conduit à des caractéristiques de frottement progressivement diminuées depuis la sous-couche externe vers la dernière sous-couche interne en sorte qu'elles sont adaptées aux variations de la puissance maximale à transmettre au cours de la vie de l'embrayage, celle-ci diminuant dans le temps avec l'usure des matériaux.

Comme on le comprend, grâce à cette disposition, le prix de revient de la garniture est par ailleurs encore diminué.

Avantageusement, la matrice commune comprend une résine phénoplaste, telle que la résine novolaque, une résine mélamine, du noir de carbone, du soufre et du sulfate de baryum.

Dans ce qui suit, les pourcentages indiqués sont des pourcentages du poids total de la garniture.

De préférence, la garniture de frottement contient 5 à 17 pour cent en poids de résine phénoplaste.

De préférence, la garniture de frottement contient 4 à 11 pour cent en poids de résine mélamine.

De préférence, la garniture de frottement contient 4 à 7 pour cent en poids de noir de carbone.

De préférence, la garniture de frottement contient 1,5 à 7 pour cent en poids de soufre.

De préférence, la garniture de frottement contient 5 à 13 pour cent en poids de sulfate de baryum.

La matrice commune peut comprendre en outre de la potasse, par exemple au plus 2 pour cent en poids.

La matrice commune peut comprendre en outre du latex, par exemple au plus 12 pour cent en poids.

La matrice commune peut comprendre en outre du caoutchouc, par exemple au plus 25 pour cent en poids.

La matrice commune peut comprendre en outre du silicate de magnésium, par exemple au plus 1 pour cent en poids.

La matrice commune peut comprendre en outre du carbonate de calcium, par exemple au plus 2 pour cent en poids.

La matrice commune peut comprendre en outre du kaolin, par exemple au plus 2 pour cent en poids.

La matrice commune peut comprendre en outre du graphite, par exemple au plus 5 pour cent en poids.

La matrice commune peut comprendre en outre une résine phénolique, par exemple au plus 1 pour cent en poids.

La matrice commune peut comprendre en outre de l'oxyde de fer, par exemple au plus 1 pour cent en poids.

La présente invention concerne également un procédé de fabrication d'une telle garniture selon lequel des charges fibreuses sont disposées dans une matrice commune selon deux couches distinctes, l'ensemble étant ensuite soumis à une cuisson sous presse.

Par exemple, une couche est obtenue par mise en forme d'un fil pré-imprégné d'un ciment constitué de la matrice commune.

Dans les exemples qui suivent, les pourcentages indiqués sont également des pourcentages du poids total de la garniture.

Selon un premier exemple, la matrice commune a la composition suivante :

| | |
|---|---|
| Résine phénoplaste novolaque | 5 % |
| Potasse | 1,3 % |
| Mélamine | 10 % |
| Latex | 11,8% |
| Noir de carbone | 6 % |
| Soufre | 6 % |
| Sulfate de baryum | 12 % |
| Carbonate de calcium | 2 % |

Des résultats identiques sont obtenus quel que soit le type de latex, styrène-butadiène ou nitrile-butadiène.

La couche de friction contient 2,5 % de fibres acryliques, 20 % de fibres de verre et 0,5 % de fils de cuivre.

La couche de fixation contient 23 % de fibres de verre.

Selon un deuxième exemple, la matrice commune a la composition suivante :

| | |
|---|---|
| Résine phénoplaste novolaque | 11 % |
| Mélamine | 4 % |
| Caoutchouc | 25 % |
| Noir de carbone | 4,4 % |
| Soufre | 3 % |
| Silicate de magnésium | 0,3 % |
| Kaolin | 1,5 % |
| Graphite | 3 % |
| Résine Cardolite | 0,5 % |
| Oxyde de fer | 0,3 % |

Cardolite est, comme on le sait, une marque déposée désignant une résine synthétique faite à partir des dérivés phénoliques des écorces de noix d'anacarde.

La couche de friction contient 7 % de fibres acryliques, 1,5 % de fils de cuivre et 15 % de fibres de verre en fils.

La couche de fixation contient 24% de fibres de verre en fils.

Selon un troisième exemple, la matrice commune a la composition suivante :

| | |
|---|---|
| Résine phénoplaste Novolaque | 15 % |
| Mélamine | 9 % |
| Caoutchouc | 20 % |
| Noir de carbone | 5,5 % |
| Soufre | 1,5 % |
| Sulfate de baryum | 5 % |

La couche de friction contient 5 % de fibres acryliques, 3 % de fils de cuivre et 14,5 % de fibres de verre en fils.

La couche de fixation contient 22,5 % de fibres de verre en fils.

Dans ces deux derniers exemples, des résultats identiques sont obtenus, quel que soit le type de caoutchouc, styrène-butadiène ou nitrile-butadiène.

Selon un quatrième exemple, la matrice commune a la composition suivante :

| | |
|---|---|
| Résine phénoplaste novolaque | 11 % |
| Mélamine | 4 % |
| Caoutchouc | 25 % |
| Noir de carbone | 4,4 % |
| Soufre | 3 % |
| Silicate de magnésium | 0,3 % |
| Kaolin | 1,5 % |
| Graphite | 3 % |
| Résine Cardolite | 0,5 % |
| Oxyde de fer | 0,3 % |

La couche de friction est composée de trois sous-couches de friction de même poids.

La première sous-couche de friction contient 1,7 % de fibres acryliques, 1 % de fils de cuivre et 4,1 % de fibres de verre en fils.

La deuxième sous-couche de friction contient 2,3 % de fibres acryliques, 0,5 % de fils de cuivre et 4,9 % de fibres de verre en fils.

La troisième sous-couche de friction contient 0,8 % de fibres acryliques, 6,7 % de fibres de verre en fils et 0,2 % de fils de cuivre.

La couche de fixation contient 22,5 % de fibres de verre en fils.

Ces garnitures de frottement sont réalisées en disposant dans la matrice commune thermodurcissable les charges fibreuses selon des couches distinctes, l'ensemble étant ensuite soumis à une cuisson sous presse ; lors de cette opération, le comportement thermique de la matrice est homogène et il s'en suit aucune déformation et aucun risque de rupture des couches.

Par exemple, pour réaliser une garniture à deux couches, une couche de friction et une couche de fixation, on part d'un fil de friction et d'un fil de fixation pré-enrobés d'un ciment constitué de la matrice commune ; ces fils sont ensuite introduits dans un dispositif de formage, ici à deux entrées, qui forme dans un bol des couches de fils, en forme de lobes par exemple ; la réalisation de la couche de friction, puis celle de la couche de fixation, est arrêtée lorsque la couche désirée est obtenue ; celle-ci peut être définie par son poids, sa hauteur ou la longueur du fil mis en oeuvre.

On a cité une garniture de frottement pour embrayages mais, bien entendu, l'invention s'applique à toute garniture de frottement, que celle-ci travaille à sec ou dans l'huile, telle que garnitures de frottement pour boîte de vitesses, différentiel, synchroniseur ou autre.

## Revendications

1. Garniture de frottement du genre comportant au moins deux couches, une couche dite de friction et une couche dite de fixation, **caractérisée par le fait que** les couches sont d'une seule pièce en étant constituées d'une matrice commune et de fibres, les fibres de la couche de friction étant un mélange de fibres acryliques et de fibres de verre et celles de la couche de fixation uniquement des fibres de verre.

2. Garniture de frottement selon la revendication 1, **caractérisée par le fait que** la matrice commune constitue 50 à 56 pour cent en poids de la garniture.

3. Garniture de frottement selon l'une des revendications 1 ou 2, **caractérisée par le fait que** les fibres de verre de la couche de fixation sont des fibres en fils.

4. Garniture de frottement selon l'une des revendications 1 à 3, **caractérisée par le fait qu**'elle contient 2 à 14 pour cent en poids de fibres acryliques dans la couche de friction.

5. Garniture de frottement selon l'une des revendications 1 à 4, **caractérisée par le fait qu**'elle contient 8 à 40 pour cent en poids de fibres de verre en fils dans la couche de friction.

6. Garniture de frottement selon l'une des revendications 3 à 5, **caractérisée par le fait qu**'elle contient jusqu'à 60 pour cent en poids de fibres de verre en fils dans la couche de fixation.

7. Garniture de frottement selon l'une des revendications 1 à 6, **caractérisée par le fait qu'**elle contient 0,1 à 10 pour cent en poids de fil de cuivre dans la couche de friction.

8. Garniture de frottement selon l'une des revendications 1 à 7, **caractérisée par le fait que** la couche de friction est composée de plusieurs couches dites sous-couches de friction.

9. Garniture de frottement selon la revendication 8, **caractérisée par le fait que** la quantité de fibres varie d'une sous-couche à l'autre.

10. Garniture de frottement selon l'une des revendications 1 à 9, **caractérisée par le fait que** la matrice commune comprend une résine phénoplaste, telle que la résine novolaque, une résine mélamine, du noir de carbone, du soufre et du sulfate de baryum.

11. Garniture de frottement selon la revendication 10, **caractérisée par le fait qu**'elle contient 5 à 17 pour cent en poids de résine phénoplaste.

12. Garniture de frottement selon l'une des revendications 10 ou 11, **caractérisée par le fait qu'**elle contient 4 à 11 pour cent en poids de résine mélamine.

13. Garniture de frottement selon l'une des revendications 10 à 12, **caractérisée par le fait qu**'elle contient 4 à 7 pour cent en poids de noir de carbone.

14. Garniture de frottement selon l'une des revendications 10 à 13, **caractérisée par le fait qu**'elle contient 1,5 à 7 pour cent en poids de soufre.

15. Garniture de frottement selon l'une des revendications 10 à 14, **caractérisée par le fait qu'**elle contient 5 à 13 pour cent en poids de sulfate de baryum.

16. Garniture de frottement selon l'une des revendications 10 à 15, **caractérisée par le fait que** la matrice commune comprend en outre de la potasse, par exemple au plus 2 pour cent en poids.

17. Garniture de frottement selon l'une des revendications 10 à 15, **caractérisée par le fait que** la matrice commune comprend en outre du latex, par exemple au plus 12 pour cent en poids.

18. Garniture de frottement selon l'une des revendications 10 à 15, **caractérisée par le fait que** la matrice commune comprend en outre du caoutchouc, par exemple au plus 25 pour cent en poids.

19. Garniture de frottement selon l'une des revendications 10 à 15, **caractérisée par le fait que** la matrice commune comprend en outre du silicate de magnésium, par exemple au plus 1 pour cent en poids.

20. Garniture de frottement selon l'une des revendications 10 à 15, **caractérisée par le fait que** la matrice commune comprend en outre du carbonate de calcium, par exemple au plus 2 pour cent en poids.

21. Garniture de frottement selon l'une des revendications 10 à 15, **caractérisée par le fait que** la matrice commune comprend en outre du kaolin, par exemple au plus 2 pour cent en poids.

22. Garniture de frottement selon l'une des revendications 10 à 15, **caractérisée par le fait que** la matrice commune comprend en outre du graphite, par exemple au plus 5 pour cent en poids.

23. Garniture de frottement selon l'une des revendications 10 à 15, **caractérisée par le fait que** la matrice commune comprend en outre une résine phénolique, par exemple au plus 1 pour cent en poids.

24. Garniture de frottement selon l'une des revendications 10 à 15, **caractérisée par le fait que** la matrice commune comprend en outre de l'oxyde de fer, par exemple au plus 1 pour cent en poids.

25. Procédé de fabrication d'une garniture de frottement selon l'une des revendications 1 à 24, **caractérisé par le fait qu'**il consiste à disposer des charges fibreuses dans une matrice commune selon au moins deux couches distinctes, l'ensemble étant ensuite soumis à une cuisson sous presse.

## Claims

1. Friction lining of the type comprising at least two layers, a so-called friction layer and a so-called fixing layer, **characterised by** the fact that the layers are in a single piece whilst consisting of a common matrix and fibres, the fibres in the friction layer being a mixture of acrylic fibres and glass fibres and those in the fixing layer solely glass fibres.

2. Friction lining according to claim 1, **characterised by** the fact that the common matrix constitutes 50 to 56 per cent by weight of the lining.

3. Friction lining according to one of claims 1 or 2, **characterised by** the fact that the glass fibres in the fixing layer are fibres as threads.

4. Friction lining according to one of claims 1 to 3, **characterised by** the fact that it contains 2 to 14 per cent acrylic fibres by weight in the friction layer.

5. Friction lining according to one of claims 1 to 4, **characterised by** the fact that it contains 8 to 40 per cent glass fibres by weight in the friction layer.

6. Friction lining according to one of claims 3 to 5, **characterised by** the fact that it contains up to 60 per cent glass fibres as threads by weight in the fixing layer.

7. Friction lining according to one of claims 1 to 6, **characterised by** the fact that it contains 0.1 to 10 per cent copper filament by weight in the friction layer.

8. Friction lining according to one of claims 1 to 7, **characterised by** the fact that the friction layer is composed of several layers referred to as friction sublayers.

9. Friction lining according to claim 8, **characterised by** the fact that the quantity of fibres varies from one sublayer to another.

10. Friction lining according to one of claims 1 to 9, **characterised by** the fact that the common matrix comprises a phenoplastic resin, such as novolak resin, a melamine resin, carbon black, sulphur and barium sulphate.

11. Friction lining according to claim 10, **characterised by** the fact that it contains 5 to 17 per cent phenoplastic resin by weight.

12. Friction lining according to one of claims 10 or 11, **characterised by** the fact that it contains 4 to 11 per cent melamine resin by weight.

13. Friction lining according to one of claims 10 to 12, **characterised by** the fact that it contains 4 to 7 per cent carbon black by weight.

14. Friction lining according to one of claims 10 to 13, **characterised by** the fact that it contains 1.5 to 7 per cent sulphur by weight.

15. Friction lining according to one of claims 10 to 14, **characterised by** the fact that it contains 5 to 13 per cent barium sulphate by weight.

16. Friction lining according to one of claims 10 to 15, **characterised by** the fact that the common matrix also comprises potash, for example no more than 2 per cent by weight.

17. Friction lining according to one of claims 10 to 15, **characterised by** the fact that the common matrix also comprises latex, for example no more than 12 per cent by weight.

18. Friction lining according to one of claims 10 to 15, **characterised by** the fact that the common matrix also comprises rubber, for example no more than 25 per cent by weight.

19. Friction lining according to one of claims 10 to 15, **characterised by** the fact that the common matrix also comprises magnesium silicate, for example no more than 1 per cent by weight.

20. Friction lining according to one of claims 10 to 15, **characterised by** the fact that the common matrix also comprises calcium carbonate, for example no more than 2 per cent by weight.

21. Friction lining according to one of claims 10 to 15, **characterised by** the fact that the common matrix also comprises kaolin, for example no more than 2 per cent by weight.

22. Friction lining according to one of claims 10 to 15, **characterised by** the fact that the common matrix also comprises graphite, for example no more than 5 per cent by weight.

23. Friction lining according to one of claims 10 to 15, **characterised by** the fact that the common matrix also comprises phenolic resin, for example no more than 1 per cent by weight.

24. Friction lining according to one of claims 10 to 15, **characterised by** the fact that the common matrix also comprises iron oxide, for example no more than 1 per cent by weight.

25. Method of manufacturing a friction lining according to one of claims 1 to 24, **characterised by** the fact that it consists of disposing fibrous fillers in a common matrix in at least two distinct layers, the whole then being subjected to curing in a press.

## Patentansprüche

1. Reibbelag mit wenigstens zwei Schichten, einer sogenannten Reibungsschicht und einer sogenannten Befestigungsschicht,
**dadurch gekennzeichnet , dass** die Schichten einteilig ausgeführt sind, wobei sie aus einer gemeinsamen Matrix und Fasern bestehen, wobei es sich bei den Fasern der Reibungsschicht um eine Mischung aus Acryl- und Glasfasern und bei denen der Befestigungsschicht ausschließlich um Glasfasern handelt.

2. Reibbelag nach Anspruch 1, **dadurch gekennzeichnet , dass** die gemeinsame Matrix 50 bis 56 Gewichtsprozent des Reibbelags bildet.

3. Reibbelag nach einem der Ansprüche 1 oder 2, **dadurch gekennzeichnet , dass** die Glasfasern der Befestigungsschicht Garnfasern sind.

4. Reibbelag nach einem der Ansprüche 1 bis 3, **dadurch gekennzeichnet , dass** er 2 bis 14 Gewichtsprozent Acrylfasern in der Reibungsschicht enthält.

5. Reibbelag nach einem der Ansprüche 1 bis 4, **dadurch gekennzeichnet , dass** er 8 bis 40 Gewichtsprozent Glasfasergarn in der Reibungsschicht enthält.

6. Reibbelag nach einem der Ansprüche 3 bis 5, **dadurch gekennzeichnet , dass** er bis zu 60 Gewichtsprozent Glasfasergarn in der Befestigungsschicht enthält.

7. Reibbelag nach einem der Ansprüche 1 bis 6, **dadurch gekennzeichnet , dass** er 0,1 bis 10 Gewichtsprozent Kupferfaden in der Reibungsschicht enthält.

8. Reibbelag nach einem der Ansprüche 1 bis 7, **dadurch gekennzeichnet , dass** sich die Reibungsschicht aus mehreren als Reibungsteilschichten bezeichneten Schichten zusammensetzt.

9. Reibbelag nach Anspruch 8, **dadurch gekennzeichnet , dass** sich die Menge der Fasern von einen Teilschicht zur anderen verändert.

10. Reibbelag nach einem der Ansprüche 1 bis 9, **dadurch gekennzeichnet , dass** die gemeinsame Matrix ein Phenoplastharz, wie etwa Novolakharz, ein Melaminharz, technischen Ruß, Schwefel und Bariumsulfat enthält.

11. Reibbelag nach Anspruch 10, **dadurch gekennzeichnet , dass** er 5 bis 17 Gewichtsprozent Phenoplastharz enthält.

12. Reibbelag nach einem der Ansprüche 10 oder 11, **dadurch gekennzeichnet, dass** er 4 bis 11 Gewichtsprozent Melaminharz enthält.

13. Reibbelag nach einem der Ansprüche 10 bis 12, **dadurch gekennzeichnet, dass** er 4 bis 7 Gewichtsprozent technischen Ruß enthält.

14. Reibbelag nach einem der Ansprüche 10 bis 13, **dadurch gekennzeichnet , dass** er 1,5 bis 7 Gewichtsprozent Schwefel enthält.

15. Reibbelag nach einem der Ansprüche 10 bis 14, **dadurch gekennzeichnet, dass** er 5 bis 13 Gewichtsprozent Bariumsulfat enthält.

16. Reibbelag nach einem der Ansprüche 10 bis 15, **dadurch gekennzeichnet , dass** die gemeinsame Matrix außerdem Kaliumkarbonat (Pottasche), zum Beispiel höchstens 2 Gewichtsprozent, enthält.

17. Reibbelag nach einem der Ansprüche 10 bis 15, **dadurch gekennzeichnet , dass** die gemeinsame Matrix außerdem Latex, zum Beispiel höchstens 12 Gewichtsprozent, enthält.

18. Reibbelag nach einem der Ansprüche 10 bis 15, **dadurch gekennzeichnet , dass** die gemeinsame Matrix außerdem Kautschuk, zum Beispiel höchstens 25 Gewichtsprozent, enthält.

19. Reibbelag nach einem der Ansprüche 10 bis 15, **dadurch gekennzeichnet , dass** die gemeinsame Matrix außerdem Magnesiumsilikat, zum Beispiel höchstens 1 Gewichtsprozent, enthält.

20. Reibbelag nach einem der Ansprüche 10 bis 15, **dadurch gekennzeichnet , dass** die gemeinsame Matrix außerdem Kalziumkarbonat, zum Beispiel höchstens 2 Gewichtsprozent, enthält.

21. Reibbelag nach einem der Ansprüche 10 bis 15, **dadurch gekennzeichnet , dass** die gemeinsame Matrix außerdem Kaolin, zum Beispiel höchstens 2 Gewichtsprozent, enthält.

22. Reibbelag nach einem der Ansprüche 10 bis 15, **dadurch gekennzeichnet , dass** die gemeinsame Matrix außerdem Graphit, zum Beispiel höchstens 5 Gewichtsprozent, enthält.

23. Reibbelag nach einem der Ansprüche 10 bis 15, **dadurch gekennzeichnet , dass** die gemeinsame Matrix außerdem ein Phenolharz, zum Beispiel höchstens 1 Gewichtsprozent, enthält.

24. Reibbelag nach einem der Ansprüche 10 bis 15, **dadurch gekennzeichnet , dass** die gemeinsame Matrix außerdem Eisenoxid, zum Beispiel höchstens 1 Gewichtsprozent, enthält.

25. Verfahren zur Herstellung eines Reibbelags nach einem der Ansprüche 1 bis 24, **dadurch gekennzeichnet , dass** es darin besteht, Faserfüllstoffe in einer gemeinsamen Matrix in wenigstens zwei verschiedenen Schichten anzuordnen, woraufhin das Ganze einer Presshärtung unterzogen wird.
